# FASCICULE DE BREVET EUROPEEN

(11) **EP 3 679 569 B1**
(45) Date de publication et mention de la délivrance du brevet: **10.04.2024**
(21) Numéro de dépôt: 18773810.9
(22) Date de dépôt: 04.09.2018
(51) Int. Cl.: G10K 11/172, B64D 15/04, B64D 33/02, F02C 7/045, F02C 7/047, B22F 10/20, F02B 77/13

(54) **PROCEDE DE FABRICATION D'UNE AME ALVEOLAIRE POUR PANNEAU ACOUSTIQUE**
VERFAHREN ZUR HERSTELLUNG EINES ZELLKERNS FÜR EINE AKUSTIKPLATTE
METHOD FOR MANUFACTURING A CELLULAR CORE FOR AN ACOUSTIC PANEL

(30) Priorité: 06.09.2017 FR 1758216
(43) Date de publication de la demande: 15.07.2020
(73) Titulaire: Safran Nacelles, 76700 Gonfreville l'Orcher (FR)
(72) Inventeur: BENARD, Quentin Alban Guillaume, 76700 Gonfreville L'Orcher (FR); DIGEOS, Virginie Emmanuelle Anne Marie, 76700 Gonfreville L'Orcher (FR)
(74) Mandataire: Germain Maureau
(86) Numéro de dépôt international: PCT/FR2018/052159
(87) Numéro de publication internationale: WO 2019/048772

(56) Documents cités:
- EP-A1- 2 244 939
- EP-A1- 2 537 754
- EP-A1- 2 604 426
- FR-A1- 3 041 937

## Description

L'invention concerne un procédé de fabrication d'une âme alvéolaire pour panneau acoustique.

L'invention concerne plus particulièrement un procédé de fabrication d'une âme alvéolaire incluant des canaux de dégivrage, pour panneau acoustique.

Le panneau acoustique réalisé par le procédé selon l'invention est particulièrement adapté pour équiper une nacelle de turboréacteur, et plus particulièrement pour équiper une lèvre d'entrée d'air d'une nacelle de turboréacteur.

Un avion est propulsé par un ou plusieurs ensembles propulsifs comprenant chacun un turboréacteur/turbopropulseur logé dans une nacelle tubulaire. Chaque ensemble propulsif est rattaché à l'avion par un mât situé généralement sous une aile ou au niveau du fuselage.

Une nacelle présente généralement une structure comprenant une entrée d'air en amont du moteur, une section médiane destinée à entourer une soufflante du turboréacteur, une section aval abritant des moyens d'inversion de poussée et destinée à entourer la chambre de combustion du turboréacteur, et est généralement terminée par une tuyère d'éjection dont la sortie est située en aval du turboréacteur.

L'entrée d'air comprend, d'une part, une lèvre d'entrée d'air adaptée pour permettre la captation optimale vers le turboréacteur de l'air nécessaire à l'alimentation de la soufflante et des compresseurs internes du turboréacteur, et d'autre part, une structure aval sur laquelle est rapportée la lèvre et destinée à canaliser l'air vers les aubes de la soufflante. L'ensemble est rattaché en amont d'un carter de la soufflante appartenant à la section amont de la nacelle.

En vol, selon les conditions de température et d'humidité, de la glace peut se former sur la nacelle, notamment au niveau de la surface externe de la lèvre d'entrée d'air. La présence de glace ou de givre modifie les propriétés aérodynamiques de l'entrée d'air et perturbe l'acheminement de l'air vers la soufflante. De plus, la formation de givre sur l'entrée d'air de la nacelle et l'ingestion de glace par le moteur en cas de détachement de blocs de glace peuvent endommager le moteur, et présenter un risque pour la sécurité du vol.

Une solution pour dégivrer la surface externe de la lèvre d'entrée d'air consiste à éviter que de la glace ne se forme sur cette surface externe en maintenant la surface concernée à une température suffisante.

Ainsi, il est connu, par exemple du brevet US 4 688 757, de prélever de l'air chaud au niveau du compresseur du turboréacteur et de l'amener au niveau de la lèvre d'entrée d'air afin de réchauffer la surface externe de la lèvre.

Aussi, il est connu d'équiper la lèvre d'entrée d'air de la nacelle d'un panneau acoustique adapté pour absorber une partie du bruit émis depuis l'intérieur de la nacelle vers l'extérieur de la nacelle.

Typiquement, le panneau acoustique comporte une peau acoustique perforée qui est agencée en regard de la veine d'entrée d'air de la nacelle et une âme alvéolaire qui est assemblée sur la peau acoustique.

L'âme alvéolaire comporte une pluralité de cellules acoustiques, formant résonateurs de Helmholtz, qui sont séparées entre elles par des cloisons périphériques.

Les cellules acoustiques s'étendent en épaisseur depuis une extrémité avant en appui sur la peau acoustique, jusqu'à une extrémité arrière obturée par une face arrière.

L'âme alvéolaire est généralement réalisée à plat et présente une grande résistance mécanique à la compression et à la flexion, ce qui rend difficile la mise en forme du panneau acoustique, notamment pour mettre en forme le panneau acoustique suivant la géométrie d'une lèvre d'entrée d'air d'une nacelle.

Le document FR 2 925 463 décrit et représente une structure pour le traitement acoustique qui fait coexister un traitement acoustique et un traitement du givre.

Selon ce document, la structure comprend une peau acoustique, une âme alvéolaire comportant des bandes de cellules, une peau réflectrice et une pluralité de canaux qui sont interposés entre les cellules et qui sont destinés à canaliser de l'air chaud d'un système de dégivrage.

On notera que les canaux et les bandes de cellules forment des sous ensembles distincts qui sont fabriqués indépendemment et qui sont assemblés entre eux.

La fabrication d'une telle structure s'avère longue et onéreuse.

De plus, les bandes de cellules qui forment l'âme alvéolaire ne semblent pas présenter une résistance mécanique élevée, l'âme alvéolaire participe donc peu à la résistance mécanique de la lèvre d'entrée d'air.

La présente invention vise notamment à résoudre les inconvénients de l'art antérieur et se rapporte pour ce faire à un procédé de fabrication d'une âme alvéolaire pour panneau acoustique, l'âme alvéolaire comportant au moins :
- une pluralité de cellules acoustiques qui sont délimitées chacune par des cloisons longitudinales périphériques et par des cloisons transversales périphériques, les cellules acoustiques s'étendant verticalement en épaisseur depuis une extrémité avant ouverte destinée à être en appui vertical sur une peau acoustique, jusqu'à une extrémité arrière obturée par une face arrière, et
- une pluralité de canaux de dégivrage qui s'étendent longitudinalement, chaque canal de dégivrage étant interposé transversalement entre deux cellules successives, les canaux de dégivrage étant adaptés pour canaliser un fluide de dégivrage,
caractérisé en ce qu'il comporte une étape de fabrication qui consiste à réaliser les cellules acoustiques et les canaux de dégivrage venus de matière, l'âme alvéolaire ainsi fabriquée au cours de l'étape de fabrication formant une pièce monolithique.

Une âme alvéolaire monolithique peut offrir une résistance mécanique élevée, ou à l'inverse l'âme alvéolaire monolithique peut être souple pour épouser une forme complexe, suivant le matériau utilisé pour sa fabrication et selon les besoins.

De plus, l'invention permet, en une unique étape de fabrication, de réaliser simultanément les canaux et les cellules de l'âme alvéolaire, afin de réduire le temps de cycle de fabrication d'un panneau acoustique.

Selon un premier mode de réalisation de l'invention, chaque canal de dégivrage s'étend longitudinalement depuis une extrémité avant des cloisons longitudinales des cellules.

Selon ce premier mode de réalisation, l'étape de fabrication est une étape de fabrication additive.

Selon un deuxième mode de réalisation, chaque canal de dégivrage est interposé entre une première cloison longitudinale d'une première cellule acoustique et une seconde cloison longitudinale d'une seconde cellule acoustique, lesdites cellules acoustiques étant directement adjacentes, les cellules acoustiques et les canaux de dégivrage étant conçus sans face de contre-dépouille.

Cette caractéristique permet de réaliser l'âme alvéolaire par moulage en une seule étape de fabrication.

Selon un troisième mode de réalisation, chaque canal de dégivrage est délimité par une face arrière qui affleure la face arrière des cellules acoustiques.

Cette caractéristique permet de favoriser le démoulage de l'âme alvéolaire.

Selon les deuxième et troisième modes de réalisation, l'étape de fabrication est une étape de fabrication par moulage.

Selon une autre caractéristique, l'étape de fabrication est une étape de fabrication par déformation d'une tôle.

Selon une autre caractéristique, le matériau utilisé pour la fabrication de l'âme alvéolaire au cours de l'étape de fabrication est un matériau sensiblement déformable élastiquement adapté pour favoriser un démoulage et pour permettre à l'âme alvéolaire d'épouser des formes complexes.

Selon une autre caractéristique, l'étape de fabrication consiste à réaliser l'âme alvéolaire en forme d'un secteur d'une pièce de révolution.

Cette caractéristique permet d'obtenir la forme définitive de l'âme alvéolaire et permet de supprimer une étape de mise en forme de l'âme alvéolaire.

Selon une autre caractéristique, le procédé comporte une étape d'assemblage qui consiste à assembler l'âme alvéolaire sur une peau acoustique avant, pour former un panneau acoustique.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en section longitudinale, qui illustre une nacelle de turboréacteur comprenant une lèvre d'entrée d'air équipée d'un panneau acoustique réalisé suivant le procédé de fabrication selon l'invention ;
- la figure 2 est une vue schématique de détail en section longitudinale, qui illustre le panneau acoustique de la figure 1 intégré dans la lèvre d'entrée d'air ;
- la figure 3 est une schématique en perspective de détail qui illustre le panneau acoustique de la figure 1 formant un secteur angulaire ;
- la figure 4 est une vue schématique en section et en perspective qui illustre une portion du panneau acoustique de la figure 1 selon un premier mode de réalisation de l'invention ;
- la figure 5 est une vue schématique en section et en perspective qui illustre une portion du panneau acoustique de la figure 1 selon un deuxième mode de réalisation de l'invention ;
- la figure 6 est une vue schématique en section et en perspective qui illustre une portion du panneau acoustique de la figure 1 selon un troisième mode de réalisation de l'invention.

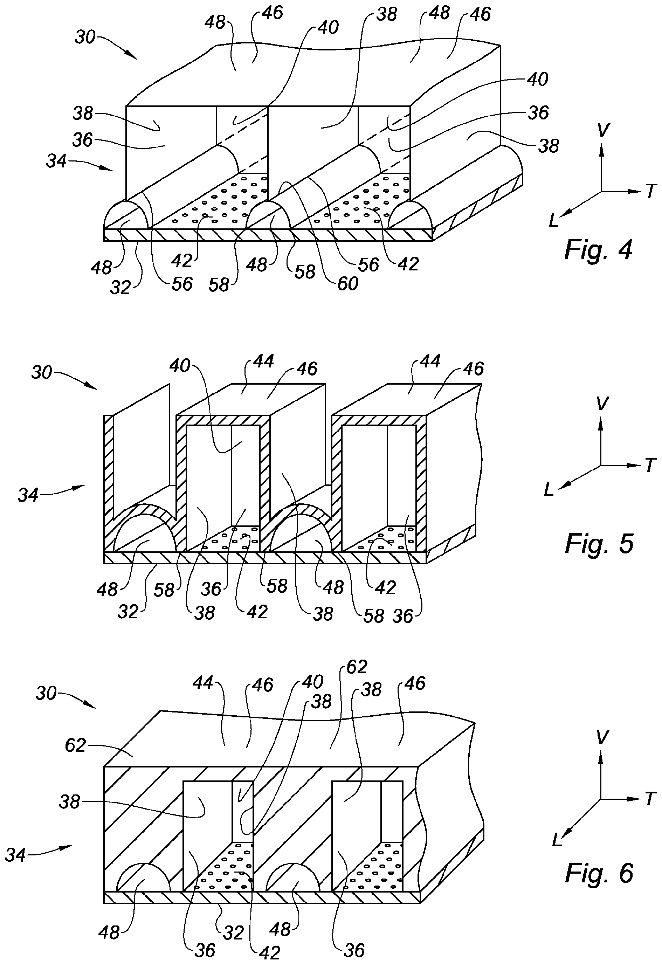

Dans la description et les revendications, on utilisera à titre non limitatif les expressions « avant » et « arrière » en référence à la partie inférieure et à la partie supérieure respectivement des figures 4 à 6.

De plus, pour clarifier la description et les revendications, on adoptera localement et à titre non limitatif la terminologie longitudinal, vertical et transversal en référence au trièdre L, V, T indiqué aux figures 4 à 6, dont l'axe L est parallèle à l'axe A de la nacelle.

On notera que l'axe vertical V s'étend globalement radialement par rapport à l'axe A longitudinal de la nacelle et l'axe transversal T s'étend globalement tangentiellement par rapport à l'axe A longitudinal de la nacelle.

De plus, pour faciliter la compréhension de la description, les portions de panneau acoustique illustrées aux figures 4 à 6 sont représentées planes, sans tenir compte du rayon de courbure du panneau acoustique dans son ensemble.

Sur l'ensemble de ces figures, des références identiques ou analogues représentent des organes ou ensembles d'organes identiques ou analogues.

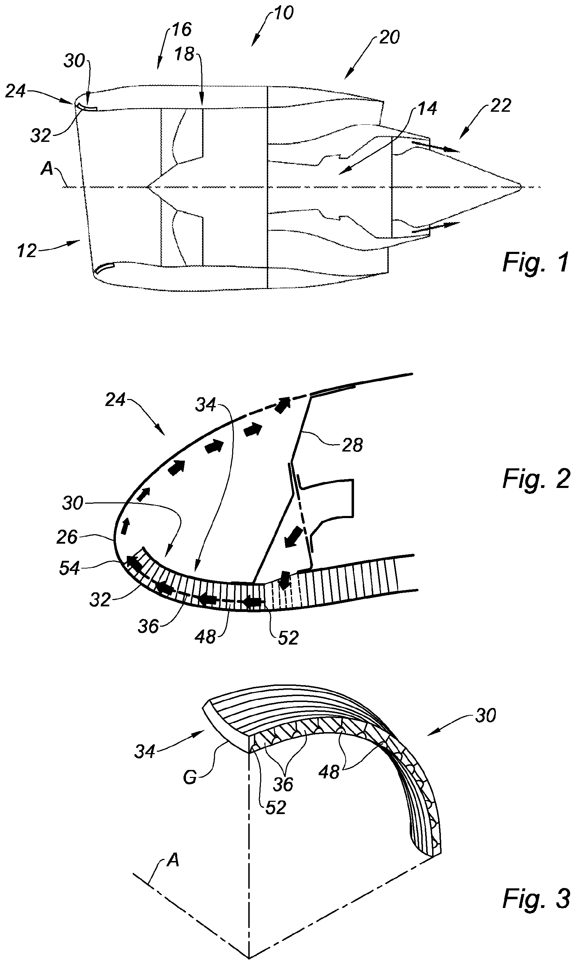

On a représenté à la figure 1 une nacelle 10 de forme globalement annulaire qui s'étend autour d'un axe A longitudinal.

La nacelle 10 comprend une entrée d'air 12 en amont du moteur 14, une section médiane 16 destinée à entourer une soufflante 18 du turboréacteur, une section aval 20 abritant des moyens d'inversion de poussée et destinée à entourer la chambre de combustion du turboréacteur, et une tuyère d'éjection 22 dont la sortie est située en aval du turboréacteur.

Comme on peut le voir à la figure 2, l'entrée d'air 12 comprend une lèvre 24 d'entrée d'air qui forme un volume de forme annulaire autour de l'axe A de la nacelle 10, de section en forme de « D ».

La lèvre 24 d'entrée d'air est délimitée par une paroi externe 26 amont à dégivrer, formant bord d'attaque, et une cloison aval 28 qui sépare le volume délimité par la lèvre 24 d'entrée d'air et le tronçon de la nacelle 10 qui est relié sur la lèvre 24.

La lèvre 24 est équipée d'un panneau acoustique 30 qui comprend une peau acoustique 32 avant perforée qui forme une partie de la paroi externe 26 de la lèvre 24 et une âme alvéolaire 34.

En référence à la figure 4, l'âme alvéolaire 34 comporte une pluralité de cellules 36 acoustiques qui sont accolées entre elles et qui sont agencées en damier.

Les cellules 36 présentent chacune une forme globalement parallélépipédique et elles sont délimitées chacune par deux cloisons longitudinales 38 périphériques en vis-à-vis et par deux cloisons transversales 40 périphériques en vis-à-vis.

Aussi, les cellules 36 acoustiques s'étendent verticalement, ou radialement, en épaisseur depuis une extrémité avant 42 ouverte qui est en appui vertical sur la peau acoustique 32, jusqu'à une extrémité arrière 44 obturée par une face arrière 46 de la cellule 36 associée.

Pour permettre de canaliser un fluide de dégivrage, comme de l'air chaud par exemple, l'âme alvéolaire 34 comporte une pluralité de canaux 48 de dégivrage qui s'étendent longitudinalement.

Chaque canal 48 de dégivrage est interposé transversalement entre deux cellules 36 successives.

Comme on peut le voir à la figure 2, chaque canal 48 présente une entrée 52 d'air chaud qui est reliée sur une source d'air chaud, au voisinage de la cloison 28 de la lèvre, et une sortie 54 d'air chaud qui débouche au voisinage du bord d'attaque de la lèvre 24, de sorte que le passage de l'air chaud à travers les canaux réchauffe la paroi externe de la lèvre 24 qui est agencée sous les canaux 48.

On a illustré la circulation de l'air chaud dans la lèvre 24 par des flèches sur la figure 2.

Le procédé de fabrication selon l'invention comporte une étape de fabrication qui consiste à réaliser les cellules 36 acoustiques et les canaux 48 de dégivrage venus de matière, l'âme alvéolaire 34 ainsi fabriquée au cours de l'étape de fabrication formant une pièce monolithique.

Selon un premier mode de réalisation de l'invention illustré à la figure 4, chaque canal 48 de dégivrage s'étend longitudinalement depuis une extrémité avant 56 des cloisons longitudinales 38 des cellules 36, chaque canal 48 reliant toutes les cloisons longitudinales 38 qui sont alignées pour formée une rangée.

Chaque canal 48 présente une section transversale en demi-cercle, qui présente deux bords longitudinaux 58 en appui sur la peau acoustique 32 et une partie centrale 60 convexe depuis laquelle s'étend la cloison longitudinale 38 de la cellule 36 associée.

A titre non limitatif, la section transversale des canaux 48 peut être de forme triangulaire pour favoriser une fabrication du type additive.

Selon ce premier mode de réalisation, l'étape de fabrication de l'âme alvéolaire 34 est une étape de fabrication additive par ajout de matière. L'âme alvéolaire 34 est par exemple réalisée en alliage d'aluminium.

La fabrication additive est également connue sous l'expression « impression tridimensionnelle » ou « impression 3D ».

L'étape de fabrication additive permet de réaliser en une seule pièce monolithique l'âme alvéolaire 34 qui comprend les cellules 36 formées des cloisons 38, 40 et de la face arrière 46, et les canaux 48.

En référence à la figure 3, l'âme alvéolaire 34 monolithique obtenue à la suite de l'étape de fabrication présente une forme d'un secteur d'une pièce de révolution autour de l'axe A de la nacelle 10, dont la génératrice G illustrée à la figure 3, en forme d'un rectangle courbé, épouse la courbure de la lèvre 24 d'entrée d'air.

Ainsi, l'âme alvéolaire 34 épouse parfaitement la forme de la lèvre 24 et de la peau acoustique 32, sans étape supplémentaire de mise en forme.

Selon un deuxième mode de réalisation de l'invention illustré à la figure 5, chaque canal 48 de dégivrage s'étend longitudinalement et est interposé entre une première cloison longitudinale 38 d'une première cellule 36 acoustique et une seconde cloison longitudinale 38 d'une seconde cellule 36 acoustique, lesdites cellules 36 acoustiques étant directement adjacentes transversalement, de sorte que les cellules 36 acoustiques et les canaux 48 de dégivrage sont conçus sans face de contre-dépouille.

On entend par « sans face de contre-dépouille » que la face arrière formée par les cellules 36 et les canaux 48 est adaptée pour permettre le retrait d'un moule de fabrication. De même, la face avant formée par les cellules 36 et les canaux 48 est adaptée pour permettre le retrait d'un moule de fabrication.

Chaque canal 48 présente une section transversale en demi-cercle, qui présente deux bords longitudinaux 58 en appui sur la peau acoustique 32.

Les deux bords longitudinaux 58 de chaque canal 48 sont communs aux bords d'extrémités avant des cloisons longitudinales 38 des cellules 36 associées.

Selon ce deuxième mode de réalisation, l'étape de fabrication de l'âme alvéolaire 34 est une étape de fabrication par moulage par injection d'un polymère souple, l'âme alvéolaire 34 étant conçue pour se déformer sensiblement afin d'épouser les courbes de la lèvre 24 d'entrée d'air et favoriser le démoulage de l'âme alvéolaire 34.

Ainsi, l'âme alvéolaire 34 peut être moulée dans une forme globalement plane, pour faciliter le moulage.

De plus, la fabrication en polymère permet l'utilisation d'une matière compatible de l'environnement extérieur et sans risque de couplage galvanique avec une autre pièce métallique.

Toujours selon ce deuxième mode de réalisation, l'âme alvéolaire 34 est réalisée par exemple en silicone.

A titre non limitatif, selon ce deuxième mode de réalisation, l'âme alvéolaire 34 peut également être réalisée par moulage par injection de métal, procédé connu sous l'acronyme MIM pour « Metal Injection Molding » en anglais.

De même, à titre non limitatif, l(âme alvéolaire 34 peut être réalisée en polyétheréthercétone (aussi désigné PEEK), ou en Polyphenylene Sulfide, par exemple, bien que ces matériaux ne soient pas souples.

De plus, selon ce deuxième mode de réalisation, l'âme alvéolaire peut également être réalisée par emboutissage d'une tôle.

Selon un troisième mode de réalisation de l'invention illustré à la figure 6, chaque canal 48 de dégivrage s'étend longitudinalement et est interposé entre une première cloison longitudinale 38 d'une première cellule 36 acoustique et une seconde cloison longitudinale 38 d'une seconde cellule 36 acoustique, lesdites cellules 36 acoustiques étant directement adjacentes transversalement.

De plus, selon ce troisième mode de réalisation, chaque canal 48 de dégivrage est délimité par une face arrière 62 qui affleure la face arrière 46 des cellules 36 acoustiques.

Ainsi, la face arrière de l'âme alvéolaire 34 est globalement plane, ce qui favorise le démoulage de l'âme alvéolaire 34.

Aussi, selon les trois modes de réalisation décrits ci-dessus, le matériau utilisé pour la fabrication de l'âme alvéolaire 34 au cours de l'étape de fabrication est un matériau qui est adapté pour résister à une température élevée pour résister au passage de l'air chaud, par exemple une température avoisinant 180 degrés Celsius.

De plus, le procédé de fabrication de l'âme alvéolaire comporte une étape d'assemblage, qui est commune aux trois modes de réalisations décrits précédemment et qui consiste à assembler l'âme alvéolaire 34 sur la peau acoustique 32, pour former le panneau acoustique 30.

L'étape d'assemblage est par exemple réalisée par collage, par brasage ou par soudage, selon le matériau utilisé pour réaliser l'âme alvéolaire 34.

La présente description de l'invention est donnée à titre d'exemple non limitatif.

## Revendications

1. Procédé de fabrication d'une âme alvéolaire (34) pour panneau acoustique (30), l'âme alvéolaire (34) comportant au moins :
- une pluralité de cellules (36) acoustiques qui sont délimitées chacune par des cloisons longitudinales (38) périphériques et par des cloisons transversales (40) périphériques, les cellules (36) acoustiques s'étendant verticalement en épaisseur depuis une extrémité avant (42) ouverte destinée à être en appui vertical sur une peau acoustique (32), jusqu'à une extrémité arrière (44) obturée par une face arrière (46), et
- une pluralité de canaux (48) de dégivrage qui s'étendent longitudinalement, chaque canal (48) de dégivrage étant interposé transversalement entre deux cellules (36) successives, les canaux (48) de dégivrage étant adaptés pour canaliser un fluide de dégivrage,
**caractérisé en ce qu'**il comporte une étape de fabrication qui consiste à réaliser les cellules (36) acoustiques et les canaux (48) de dégivrage venus de matière, l'âme alvéolaire (34) ainsi fabriquée au cours de l'étape de fabrication formant une pièce monolithique.

2. Procédé de fabrication selon la revendication 1, **caractérisé en ce que** chaque canal (48) de dégivrage s'étend longitudinalement depuis une extrémité avant (56) des cloisons longitudinales (38) des cellules (36).

3. Procédé de fabrication selon la revendication 2, **caractérisé en ce que** l'étape de fabrication est une étape de fabrication additive.

4. Procédé de fabrication selon la revendication 1, **caractérisé en ce que** chaque canal (48) de dégivrage est interposé entre une première cloison longitudinale (38) d'une première cellule (36) acoustique et une seconde cloison longitudinale (38) d'une seconde cellule (36) acoustique, lesdites cellules (36) acoustiques étant directement adjacentes, les cellules (36) acoustiques et les canaux (48) de dégivrage étant conçus sans face de contre-dépouille, de sorte que la face arrière formée par les cellules (36) et les canaux (48) soit adaptée pour permettre le retrait d'un moule de fabrication.

5. Procédé de fabrication selon la revendication 1, **caractérisé en ce que** chaque canal (48) de dégivrage est délimité par une face arrière (62) qui affleure la face arrière (46) des cellules (36) acoustiques.

6. Procédé de fabrication selon l'une quelconque des revendications 4 et 5, **caractérisé en ce que** l'étape de fabrication est une étape de fabrication par moulage.

7. Procédé de fabrication selon la revendication 4, **caractérisé en ce que** l'étape de fabrication est une étape de fabrication par déformation d'une tôle.

8. Procédé de fabrication selon l'une quelconque des revendications précédentes, **caractérisé en ce que** le matériau utilisé pour la fabrication de l'âme alvéolaire (34) au cours de l'étape de fabrication est un matériau sensiblement déformable élastiquement adapté pour favoriser un démoulage et pour permettre à l'âme alvéolaire (34) d'épouser des formes complexes.

9. Procédé de fabrication selon l'une quelconque des revendications précédentes, **caractérisé en ce que** l'étape de fabrication consiste à réaliser l'âme alvéolaire (34) en forme d'un secteur d'une pièce de révolution.

10. Procédé de fabrication selon l'une quelconque des revendications précédentes, **caractérisé en ce qu'**il comporte une étape d'assemblage qui consiste à assembler l'âme alvéolaire (34) sur une peau acoustique (32) avant, pour former un panneau acoustique (30).

## Patentansprüche

1. Verfahren zum Herstellen eines zellulären Kerns (34) für eine Akustikplatte (30), wobei der zelluläre Kern (34) mindestens Folgendes umfasst:
- eine Vielzahl von Akustikzellen (36), die jeweils durch periphere Längstrennwände (38) und durch periphere Quertrennwände (40) begrenzt werden, wobei sich die Akustikzellen (36) vertikal über eine Dicke von einem offenen vorderen Ende (42), das dazu bestimmt ist, vertikal auf einer Akustikhaut (32) aufzuliegen, bis zu einem hinteren Ende (44), das durch eine rückwärtige Fläche (46) verschlossen ist, erstrecken, und
- eine Vielzahl von Enteisungskanälen (48), die sich in Längsrichtung erstrecken, wobei jeder Enteisungskanal (48) in Querrichtung zwischen zwei aufeinanderfolgenden Zellen (36) eingefügt ist, wobei die Enteisungskanäle (48) dazu ausgelegt sind, ein Enteisungsfluid zu leiten,
**dadurch gekennzeichnet, dass** es einen Herstellungsschritt umfasst, der darin besteht, die Akustikzellen (36) und die Enteisungskanäle (48) in einem Stück zu erstellen, so dass der somit während des Herstellungsschritts hergestellte zelluläre Kern (34) einen monolithischen Teil bildet.

2. Herstellungsverfahren nach Anspruch 1, **dadurch gekennzeichnet, dass** sich jeder Enteisungskanal (48) in Längsrichtung von einem vorderen Ende (56) der Längstrennwände (38) der Zellen (36) erstreckt.

3. Herstellungsverfahren nach Anspruch 2, **dadurch gekennzeichnet, dass** der Herstellungsschritt ein additiver Herstellungsschritt ist.

4. Herstellungsverfahren nach Anspruch 1, **dadurch gekennzeichnet, dass** jeder Enteisungskanal (48) zwischen einer ersten Längstrennwand (38) einer ersten Akustikzelle (36) und einer zweiten Längstrennwand (38) einer zweiten Akustikzelle (36) eingefügt ist, wobei die Akustikzellen (36) direkt benachbart sind, wobei die Akustikzellen (36) und die Enteisungskanäle (48) ohne eine hinterschnittene Fläche konzipiert sind, so dass die durch die Zellen (36) und die Kanäle (48) gebildete rückwärtige Fläche dazu ausgelegt ist, das Entfernen einer Herstellungsform zu ermöglichen.

5. Herstellungsverfahren nach Anspruch 1, **dadurch gekennzeichnet, dass** jeder Enteisungskanal (48) durch eine rückwärtige Fläche (62) begrenzt wird, die bündig mit der rückwärtigen Fläche (46) der Akustikzellen (36) abschließt.

6. Herstellungsverfahren nach einem der Ansprüche 4 und 5, **dadurch gekennzeichnet, dass** der Herstellungsschritt ein Herstellungsschritt durch Formen ist.

7. Herstellungsverfahren nach Anspruch 4, **dadurch gekennzeichnet, dass** der Herstellungsschritt ein Herstellungsschritt durch Verformung eines Blechs ist.

8. Herstellungsverfahren nach einem der vorhergehenden Ansprüche, **dadurch gekennzeichnet, dass** das Material, das zum Herstellen des zellulären Kerns (34) während des Herstellungsschritts verwendet wird, ein im Wesentlichen elastisch verformbares Material ist, das dazu ausgelegt ist, das Entformen zu erleichtern und es dem zellulären Kern (34) zu ermöglichen, sich an komplexe Formen anzupassen.

9. Herstellungsverfahren nach einem der vorhergehenden Ansprüche, **dadurch gekennzeichnet, dass** der Herstellungsschritt darin besteht, den zellulären Kern (34) in Form eines Sektors eines rotationssymmetrischen Teils zu erstellen.

10. Herstellungsverfahren nach einem der vorhergehenden Ansprüche, **dadurch gekennzeichnet, dass** es ferner einen Montageschritt umfasst, der darin besteht, den zellulären Kern (34) auf einer vorderen Akustikhaut (32) zu montieren, um eine Akustikplatte (30) zu bilden.

## Claims

1. A method for manufacturing a cellular core (34) for an acoustic panel (30), the cellular core (34) including at least:
- a plurality of acoustic cells (36) each being delimited by peripheral longitudinal partition walls (38) and by peripheral transverse partition walls (40), the acoustic cells (36) extending vertically across the thickness from an open front end (42) intended to bear vertically on an acoustic skin (32), up to a rear end (44) sealed by a rear face (46), and
- a plurality of deicing channels (48) which extend longitudinally, each deicing channel (48) being interposed transversely between two successive cells (36), the deicing channels (48) being adapted to channel a deicing fluid,
**characterized in that** it includes a manufacturing step which consists in making the acoustic cells (36) and the deicing channels (48) integrally in one-piece, the cellular core (34) thus manufactured during the manufacturing step forms a monolithic part.

2. The manufacturing method according to claim 1, **characterized in that** each deicing channel (48) extends longitudinally from a front end (56) of the longitudinal partition walls (38) of the cells (36).

3. The manufacturing method according to claim 2, **characterized in that** the manufacturing step is an additive manufacturing step.

4. The manufacturing method according to claim 1, **characterized in that** each deicing channel (48) is interposed between a first longitudinal partition wall (38) of a first acoustic cell (36) and a second longitudinal partition wall (38) of a second acoustic cell (36), said acoustic cells (36) being directly adjacent, the acoustic cells (36) and the deicing channels (48) being designed without any undercut face, such that the rear face formed by the cells (36) and the channels (48) is adapted to enable the removal of a manufacturing mold.

5. The manufacturing method according to claim 1, **characterized in that** each deicing channel (48) is delimited by a rear face (62) which is flush with the rear face (46) of the acoustic cells (36).

6. The manufacturing method according to any one of claims 4 and 5, **characterized in that** the manufacturing step is a step of manufacturing by molding.

7. The manufacturing method according to claim 4, **characterized in that** the manufacturing step is a step of manufacturing by deformation of a sheet metal.

8. The manufacturing method according to any one of the preceding claims, **characterized in that** the material used for the manufacture of the cellular core (34) during the manufacturing step is a substantially elastically-deformable material adapted to facilitate demolding and to enable the cellular core (34) to conform to complex shapes.

9. The manufacturing method according to any one of the preceding claims, **characterized in that** the manufacturing step consists in making the cellular core (34) shaped as a sector of a rotationally-symmetric part.

10. The manufacturing method according to any one of the preceding claims, **characterized in that** it includes an assembly step which consists in assembling the cellular core (34) on a front acoustic skin (32), to form an acoustic panel (30).
